(19) **Europäisches Patentamt / European Patent Office / Office européen des brevets**

(11) **EP 2 053 602 A1**

(12) **EUROPEAN PATENT APPLICATION**
published in accordance with Art. 153(4) EPC

(43) Date of publication:
**29.04.2009 Bulletin 2009/18**

(51) Int Cl.:
**G11B 7/007** (2006.01)     **G11B 7/24** (2006.01)

(21) Application number: **07831466.3**

(22) Date of filing: **08.11.2007**

(86) International application number:
**PCT/JP2007/071735**

(87) International publication number:
**WO 2008/062675 (29.05.2008 Gazette 2008/22)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.11.2006 JP 2006316186**

(71) Applicant: **Sony Corporation Tokyo 108-0075 (JP)**

(72) Inventors:
- **SAKAMOTO, Tetsuhiro Tokyo 108-0075 (JP)**
- **NAKANO, Jun Tokyo 108-0075 (JP)**

- **SAITO, Akiya Tokyo 141-0001 (JP)**
- **SENNO, Toshihiko Tokyo 141-0001 (JP)**
- **USUI, Yoshinobu Shinagawa-ku Tokyo 141-0001 (JP)**
- **TSUKAHARA, Makoto Shinagawa-ku Tokyo 141-0001 (JP)**

(74) Representative: **Müller - Hoffmann & Partner Patentanwälte Innere Wiener Strasse 17 81667 München (DE)**

(54) **REPRODUCTION-ONLY OPTICAL DISC MEDIUM AND METHOD FOR MANUFACTURING THE SAME**

(57)     At the stage where disc substrates are to be manufactured in mass production by using a stamper, a section where pits/lands are not formed is formed in advance as an additional information recording section among recording tracks formed by a recording data sequence of pits/lands. A metal alloy reflection film is coated on the information recording surface including such an additional information recording section 10. Then, thereafter, additional information is recorded in the additional information recording section 10 by forming hole marks 6 by erasing or decreasing a partial area of the metal alloy reflection film. The additional information is recorded in a partial area of recording tracks in the information recording area (the area where information is recorded by a recording data sequence of pits/lands, the area including a content area and a management area such as a lead-in). The hole marks 6 are formed as marks from which logic values that are the same as those of pits are obtained at the time of reproduction.

FIG. 4A

**Description**

Technical Field

The present invention relates to a read-only optical disc medium and a method of manufacturing the read-only optical disc medium. More particularly, the present invention relates to a technology capable of attaching unique information in an individual manner on read-only optical disc media to be manufactured.

Background Art

[Patent Document 1] Japanese Unexamined Patent Application Publication No. 2001-135021
[Patent Document 2] PCT International Publication WO 01/008145 Pamphlet
[Patent Document 3] PCT International Publication WO 02/101733 Pamphlet

For example, on an optical disc medium, such as a read-only, i.e., ROM (Read-Only Memory) type CD (Compact Disc), a DVD (Digital Versatile Disc), a BD (Blu-ray disc: registered trademark), or an HD-DVD (High-Definition DVD), music, video, games, application programs, and other information data are recorded in an area called a content area in accordance with a predetermined recording modulation method.
Many content holders use these read-only optical disc media as content providing means due to a low production cost in virtue of excellent mass production characteristics.
By using a DVD as an example, a step of manufacturing a read-only optical disc medium can be broadly classified into a mastering step of manufacturing a master disc of optical discs; a molding film-forming step for manufacturing many disc substrates by using a stamper manufactured from an optical disc master and for forming a film on the disc substrate; and a lamination step of laminating a pair of optical discs having a thickness of 0.6 mm by using an adhesive having a predetermined thickness into a DVD disc medium having a thickness of 1.2 mm.
In the molding film-forming step, disc substrates that are mass-produced using a stamper are such that a recessed and projecting pattern formed in the stamper is transferred. That is, in a portion serving as an information recording surface, a recording data sequence formed of pits and lands as a pattern of a recessed and projecting shape is formed, and this recording data sequence is formed as spiral or concentric recording tracks. Then, with respect to the recessed and projecting shape, the information recording surface on which pits/lands are formed is coated with a metal alloy reflection film.
After the disc is completed, the reflection film allows laser light irradiated from a reproduction device to be reflected in pit/land portions.

Disclosure of Invention

Technical Problem

In a read-only optical disc, it is assumed that additional information is not recorded after the disc has been manufactured. Furthermore, as described above, the information recording surface is coated with a reflection film; however, it is not considered that this reflection film is used as a recording film.
However, in recent years, there has been a demand for a method of recording additional information, such as a unique identification number, for each of read-only optical discs manufactured for the purpose of managing read-only optical discs on which predetermined information data is recorded.
However, since a read-only optical disc is manufactured by the above-described manufacturing step, it has been difficult to record additional information as information data based on pits onto a read-only optical disc on which predetermined information data has already been recorded as pits without exerting an influence on the predetermined information data, the read-only optical disc being processed by a molding film-forming step.
That is, it has been difficult to record additional information in an information recording area (content area, etc.) in which information data already exists as pits.
For this reason, in most methods of recording additional information, such as an identification number, on a read-only optical disc, which have hitherto been proposed, methods are adopted in which it is assumed that additional information is recorded in an area other than a content area, or in which additional information is recorded by a method differing from a recording modulation method for a main signal (signal recorded using pits/lands transferred from a stamper).
However, in the case of a read-only optical disc on which additional information has been recorded using these methods, the additional information data is read on the basis of a signal output differing from a main signal output, a modulation method, or reading from an area other than a content area. For this reason, only a reproduction device having a dedicated reading function can read additional information data, and a situation occurs in which it is difficult for an existing reproduction device to read additional information, presenting the problem that compatibility is poor.

For example, a BCA (Burst Cutting Area) defined by the DVD-ROM standard is recorded in an area differing from an information recording area by using a recording modulation method differing from that for a main signal. As a consequence, a reproduction device having a dedicated reading function is necessary.

Furthermore, it is described in Patent Document 1 mentioned above that an area other than an information recording area is selected to record additional information.

Furthermore, it is disclosed in Patent Document 2 mentioned above that, for reading a signal in which additional information has been recorded, a difference in reflectance with the existing information recorder is used. In this case, a reproduction device having a dedicated reading function is necessary.

Accordingly, it is an object of the present invention to achieve, in the case of a read-only optical disc media, after disc substrates having the same recording content have been formed in the molding film-forming step, recording of additional information for each individual disc, and reading of the additional information without necessitating a special reading device.

Technical Solution

A read-only optical disc medium according to the present invention is a read-only optical disc medium which has an information recording surface having a recessed and projecting shape, the information recording surface being formed on the basis of a first modulation signal, and a reflection film with which the information recording surface is coated, and on which recording tracks are formed by forming the recessed and projecting shape as a first recording data sequence formed of pits and lands, wherein an additional information recording section in which the information recording surface is planar is provided in the recording tracks on which the first recording data sequence formed of pits and lands is formed, and in the additional information recording section, a second recording data sequence formed in such a manner that the reflection film is erased or decreased on the basis of a second modulation signal is formed.

A modulation method for generating the first modulation signal and a modulation method for generating the second modulation signal are the same modulation method.

Furthermore, a logic value corresponding to the pits, the logic value being detected from a reproduction signal read from the first recording data sequence, is the same as a logic value corresponding to a portion in which the reflection film is erased or decreased, the logic value being detected from the reproduction signal read from the second recording data sequence.

Furthermore, the additional information recording section has a length from 2 $\mu$m to 150 $\mu$m in the line direction of the recording tracks.

Furthermore, a recording track adjacent, in the radial direction of the disc, to the recording track on which the additional information recording section is formed is a recording track on which the recording data sequence formed of pits and lands is formed.

Furthermore, the optical disc medium has a first information recording surface far from a light incidence surface and a second information recording surface close to the light incidence surface, the additional information recording section is provided on at least the first information recording surface, and in the additional information recording section on the first information recording surface, the second recording data sequence formed in such a manner that the reflection film is erased or decreased on the basis of the second modulation signal is formed.

Furthermore, the additional information recording section is provided on at least the second information recording surface, and in the additional information recording section on the second information recording surface, the second recording data sequence formed in such a manner that the reflection film is erased or decreased on the basis of the second modulation signal is formed.

Furthermore, the second recording data sequence has a pattern of 3T to 14T, a reflectance of the second recording data sequence is from 60% to 85%, a degree of modulation of the second recording data sequence satisfies the following:

$$I14/I14H \geq 0.60$$

$$I3/I14 \geq 0.15,$$

an asymmetry of the second recording data sequence satisfies the following:

$$-0.05 \leq ((I14H + I14L)/2 - (I3H + I3L)/2)/I14 \leq 0.15,$$

and

a jitter value is smaller than or equal to 8.0%.

A method of manufacturing a read-only optical disc medium according to the present invention includes a mastering step of forming a stamper having a recessed and projecting shape on the basis of a first modulation signal; a molding step of forming the recessed and projecting shape on an information recording surface by using the stamper; and a film-forming step of coating a reflection film on the information recording surface, wherein, in the mastering step, a planar additional information recording section is formed in the stamper, in the film-forming step, the planar additional information recording section is formed, after the film-forming step, an additional recording step of erasing or decreasing the reflection film in the additional information recording section on the basis of a second modulation signal is provided. Recording tracks are structured by forming the recessed and projecting shape inverted on the information recording surface as a first recording data sequence formed of pits and lands and by forming the erasure or decrease of the reflection film in the additional information recording section as a second recording data sequence. The method includes a laminating step of laminating a substrate having the recording tracks and another substrate after the film-forming step and before the additional recording step.

That is, in the present invention, at the stage where disc substrates are manufactured in mass production by using a stamper, a section where no pits/lands are formed is formed as an additional information recording section in advance among the recording tracks formed of a recording data sequence of pits/lands. A metal alloy reflection film, including such additional information recording sections, is coated on an information recording surface. Then, thereafter, hole marks are formed by erasing or decreasing a partial area of the metal alloy reflection film in the additional information recording section, and thereby additional information is recorded. That is, the additional information is recorded in a partial area of recording tracks in the information recording area (area where information is recorded by a recording data sequence of pits/lands, including a content area and a management area, such as a lead-in and the like). Furthermore, the hole marks are formed as marks from which logic values identical to pits are obtained at the time of reproduction.

Advantageous Effects

According to the present invention, additional information data is recorded as a recording data sequence of marks (hole marks) formed by erasing or decreasing a partial area of a metal alloy reflection film in a partial area of recording tracks in an information recording area. Furthermore, a recording data sequence of hole marks and a recording data sequence of pits/lands are formed on the basis of a modulation signal obtained by modulating information data to be recorded by the same modulation method. Furthermore, hole marks are formed as marks from which logic values identical to those of pits are obtained at the time of reproduction. On account of these facts, the present invention has the advantage of capable of recording additional information individually on read-only optical disc media and capable of reproduction, including additional information, even if a reproduction device does not have a special reading function.

Brief Description of Drawings

[Fig. 1] Fig. 1 is an illustration of a disc manufacturing step according to an embodiment of the present invention.
[Fig. 2] Fig. 2 is a plan view of a read-only optical disc according to the embodiment.
[Fig. 3A] Fig. 3A is a partially enlarged view of the read-only optical disc according to the embodiment.
[Fig. 3B] Fig. 3B is a schematic sectional view of the read-only optical disc according to the embodiment.
[Fig. 4A] Fig. 4A is a partially enlarged view of the read-only optical disc according to the embodiment.
[Fig. 4B] Fig. 4B is a schematic sectional view of the read-only optical disc according to the embodiment.
[Fig. 5A] Fig. 5A is a partially enlarged view of the read-only optical disc according to the embodiment before additional information is recorded.
[Fig. 5B] Fig. 5B is a schematic sectional view of the read-only optical disc according to the embodiment before additional information is recorded.
[Fig. 6] Fig. 6 is an illustration using an SEM photograph of an additional information recording section of the read-only optical disc according to the embodiment. (No. 1)

[Fig. 7A] Fig. 7A is a schematic sectional view of having a two-layer structure according to the embodiment.

[Fig. 7B] Fig. 7B is a schematic sectional view of a read-only optical disc having a two-layer structure according to the embodiment. (No. 2)

[Fig. 8] Fig. 8 is an illustration of the relationship between the film thickness and the reflectance of a reflection film according to the embodiment.

[Fig. 9] Fig. 9 is an illustration of an eye pattern of a reproduction signal.

[Fig. 10] Fig. 10 is an illustration of a reproduction signal waveform according to the embodiment.

Best Modes for Carrying Out the Invention

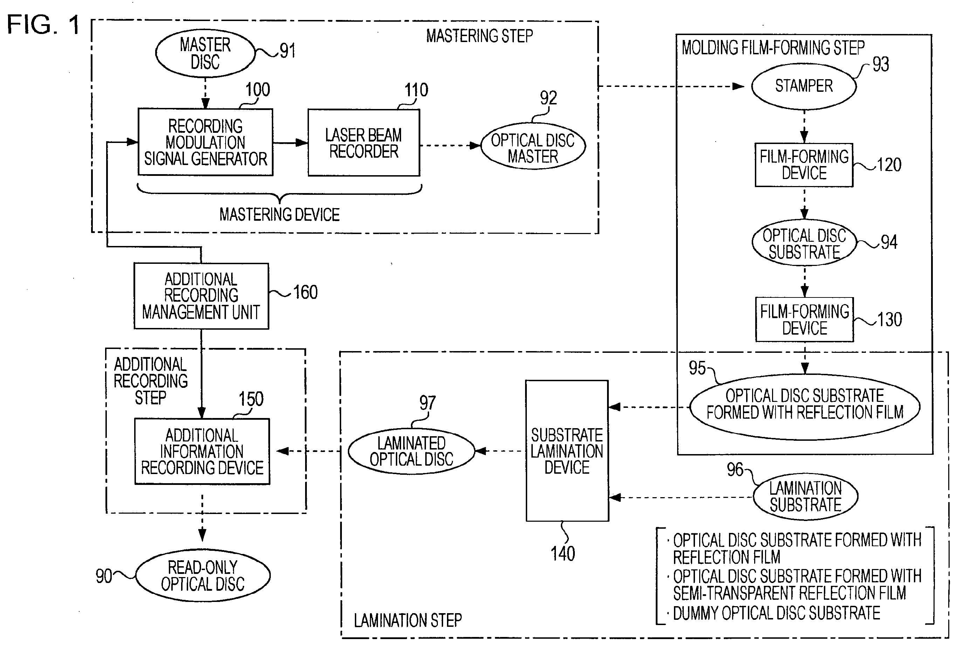

Embodiments of the present invention will be described below in the following order. In the embodiments, examples are described in which a read-only optical disc medium of the present invention is used as a read-only optical disc employing a DVD method. First, a step of manufacturing a read-only optical disc 90 according to an embodiment will be described with reference to Fig. 1.

Fig. 1 shows a step of manufacturing a read-only optical disc as a DVD of this embodiment. The disc manufacturing step of this example, as shown in the figure, is broadly classified into a mastering step of manufacturing a master disc of optical discs by using a laser beam; a molding film-forming step of manufacturing many disc substrates by using a stamper manufactured from an optical disc master and forming a film on a disc substrate; a lamination step of laminating a pair of two optical discs having a thickness of 0.6 mm by using an adhesive having a predetermined thickness into an optical disc having a thickness of 1.2 mm; and an additional recording step of recording, for example, additional information such as identification information, into individual laminated optical discs.

Each step will be described.

The mastering step is a step of manufacturing an optical disc master 92 on the basis of the information data recorded on a master disc 91. In this step, a mastering device having a recording modulation signal generator 100 and a laser beam recorder 110 is used.

The recording modulation signal generator 100 reproduces the master disc 91 in order to read information data to be recorded, and outputs an EFM+ signal generated by EFM+ (Eight to Fourteen Modulation plus) modulating a signal of the read information data to the laser beam recorder 110.

The optical disc master 92 is such that a photo-resist that is a photosensitive material is coated on a glass plate. The laser beam recorder 110 irradiates the optical disc master 92 with laser light in accordance with the supplied EFM+ signal, and performs an exposure of a pit pattern based on the EFM+ signal. Thereafter, when the photo-resist film is subjected to a development process, in the case of a positive resist, the exposed portion is melt, a recessed and projecting pattern is formed on a photo-resist film, and a pit pattern (recessed and projecting shape of pits/lands) that is in accord with a predetermined format is formed on the surface of the optical disc master 92.

Furthermore, as described above, the recording modulation signal generator 100 generates an EFM+ signal on the basis of the signal read from the master disc 91, and inserts a non-modulation signal into a specific partial section of the EFM+ signal on the basis of an instruction from an additional recording management unit 160.

During the timing period of the non-modulation signal, laser light in the laser beam recorder 110 becomes off. That is, as a result of a non-modulation signal being inserted into the EFM+ signal, a section which is not exposed on the optical disc master 92 is formed. This section becomes entirely a land, where a recessed and projecting shape is not formed. This becomes an additional information recording section (to be described later).

On the basis of such an optical disc master 92, a die called a stamper 93 in which a pit pattern of the optical disc master 92 is inverted and transferred is manufactured. Naturally, an additional information recording section is also formed in the stamper 93.

Next, in the molding film-forming step, first, the molding device 120 manufactures an optical disc substrate 94 by using the stamper 93. A recessed and projecting pattern formed on the optical disc master 92 is transferred into the optical disc substrate 94, and a pit pattern is formed.

As a method of manufacturing the optical disc substrate 94, compression molding, injection molding, a photohardening method, and the like are known.

Next, the film forming device 130 allows a coating film, such as a reflection film, to be coated on the optical disc substrate 94 to which a pit pattern is transferred from the stamper 93, thereby forming an optical disc substrate 95 formed with a reflection film.

Next, in the laminating step, the optical disc substrate 95 formed with the reflection film is laminated with a lamination substrate 96.

For the lamination substrate 96, an optical disc substrate formed with a reflection film manufactured in the step similar to that described above, an optical disc substrate formed with a semi-transparent reflection film, or a dummy optical disc substrate on which a reflection film is not coated is used.

A substrate lamination device 140 laminates one of the lamination substrates 96 with the optical disc substrate 95 formed with the reflection film in order to manufacture an optical disc 97.

As the bonding technique for lamination, a technique using an ultraviolet hardening resin, a technique using a sheet with a tackifier, and the like are known.

In a DVD of the related art, the laminated optical disc 97 becomes a DVD as a completed product. In this case, an additional information recording section where a pit pattern is not formed is provided in a partial section on the recording tracks in which a pit pattern is formed in the manner described above.

Accordingly, an additional recording step is performed on the laminated optical disc 97. In the additional recording step, an additional information recording device 150 writes additional information into an additional information recording section on the optical disc 97. For example, identification information different for each individual optical disc is written as additional information.

The additional information recording device 150, to which position information (address) of the additional information recording section is indicated from the additional recording management unit 160 and additional information to be written are provided, writes the additional information.

In this case, the additional information recording device 150 performs writing by a technique in which EFM+ modulation is performed on the additional information, high output laser pulses for recording are irradiated on the basis of the EFM+ signal, and a reflection film in the additional information recording section is erased or decreased, thereby forming hole marks.

As a result of such an additional recording step being completed, the manufacture of the read-only optical disc 90 is completed. Then, read-only optical discs 90 that are produced in mass production in the above steps can be formed as optical discs on which unique additional information is recorded individually although they are optical discs on which the same content (music, video, games, application programs, etc.) is recorded.

The read-only optical disc 90 (DVD) of this example, which is manufactured in the manner described above, will be described.

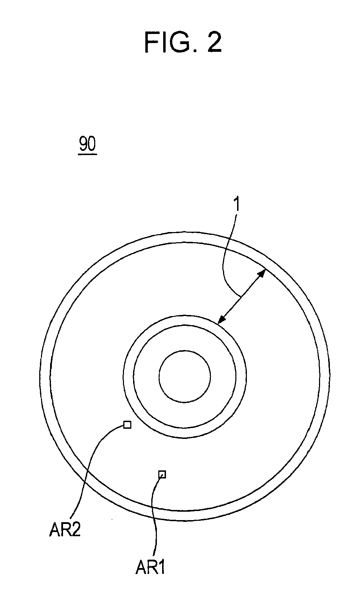

Fig. 2 is a plan view of the read-only optical disc 90. The read-only optical disc 90 is a disc having a diameter of 12 cm, and the area indicated by the radius range of an arrow is an information recording area 1. The information recording area 1 is an area in which a recording data sequence of pits/lands based on an EFM+ signal is formed as spiral recording tracks, and is an area including a lead-in area in which management information is recorded, a content area in which content data is recorded, and a lead-out area.

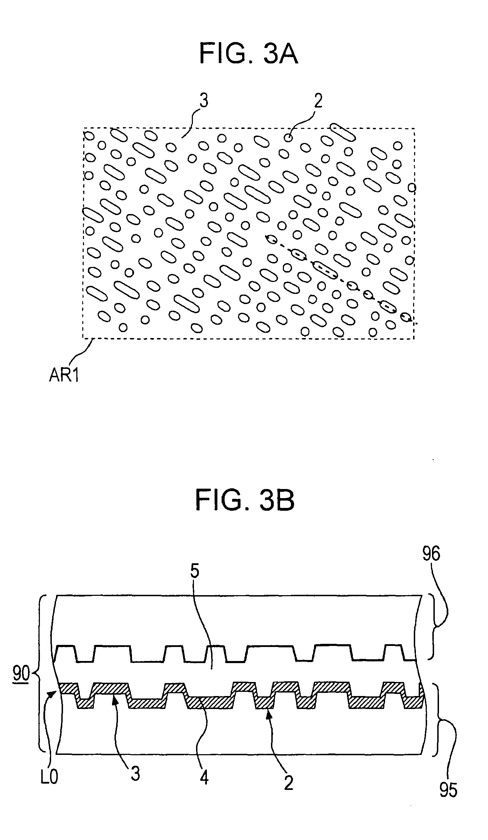

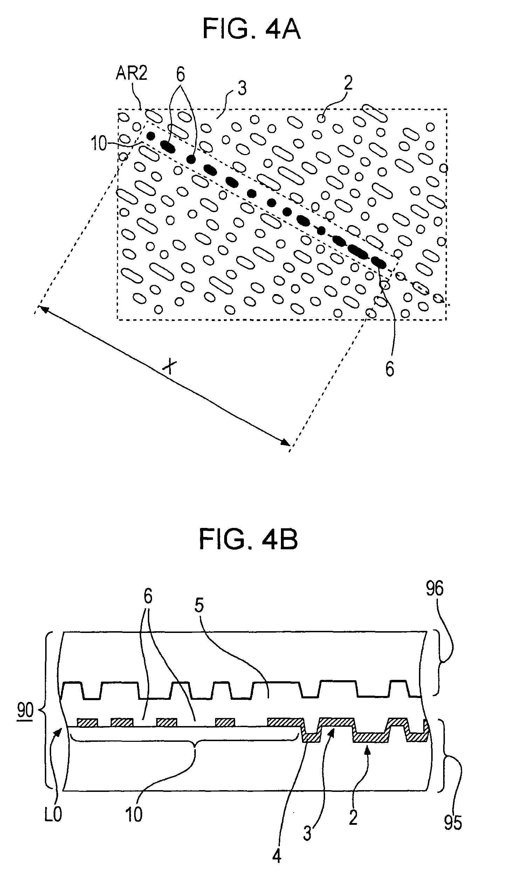

An enlarged view and a schematic sectional view of portions indicated by a range AR1 and a range AR2 in Fig. 2 in the information recording area 1 are shown in Figs. 3A and 3B and Figs. 4A and 4B, respectively.

Here, the range AR1 is a portion where ordinary recording tracks as a recording data sequence of pits/lands is generated, and the range AR2 is a portion containing an additional information recording section where hole pits are formed.

An enlarged view of the range AR1 is shown in Fig. 3A, and a schematic sectional view of a broken-line portion of Fig. 3A is shown in Fig. 3B.

Fig. 3A shows a state in which a pattern as a recording data sequence of the pit 2 and the land 3 is formed.

Then, as can be seen from Fig. 3B, the read-only optical disc 90 is formed into a thickness of 1.2 mm as a result of laminating the optical disc substrate 95 formed with the reflection film having a thickness of 0.6 mm, each of which is formed of, for example, polycarbonate, and the lamination substrate (dummy optical disc substrate) 96 using an adhesive 5 (for example, an ultraviolet hardening resin or a bonded sheet).

In this case, one main surface of the optical disc substrate 95 formed with the reflection film is formed as an information recording surface L0, and the information recording surface L0 is formed as a recessed and projecting pattern formed by pits 2 and lands 3. Furthermore, the surface of the pits 2 and the lands 3 are formed with the reflection film 4.

The recessed and projecting relationship of the pits 2 and lands 3 may be reverse.

For the lamination substrate 96 laminated with the optical disc substrate 95 formed with the reflection film, in Fig. 3B, a dummy optical disc substrate (disc substrate that is not coated with a reflection film) is used. As described above, for the lamination substrate 96, an optical disc substrate formed with the reflection film and an optical disc substrate formed with the semi-transparent reflection film may be used as the lamination substrate 96.

The adhesive 5 is, in general, optically transparent, and may not be optically transparent depending on the structure.

When the lamination substrate 96 laminated with the optical disc substrate 95 formed with a reflection film has a reflection film or a semi-transparent reflection film, the bonded surface thereof becomes a surface on which a reflection film or a semi-transparent reflection film is formed.

Next, an enlarged view of the range AR2 in Fig. 2 is shown in Fig. 4A, and a schematic sectional view of a broken-line portion of Fig. 4A is shown in Fig. 4B.

As shown in Fig. 4A, a partial section of a certain circulation track is formed as an additional information recording section 10. In the additional information recording section 10, a recording data sequence of hole marks 6 formed in the additional recording step is formed. That is, the additional information is recorded as a recording data sequence of hole marks 6. The portion before and after the portion of the additional information recording section in the track line direction is a recording data sequence of pits 2 and lands 3, and tracks adjacent to the additional information recording section 10 are also a recording data sequence by pits 2 and lands 3.

As shown in Fig. 4B, the basic layer structure of the range AR2 is similar to that in Fig. 3B, and hole marks 6 are formed in a portion of the information recording surface L0. That is, the hole marks 6 are formed in such a manner that the metal alloy reflection film 4 is erased or decreased so as to hardly exist.

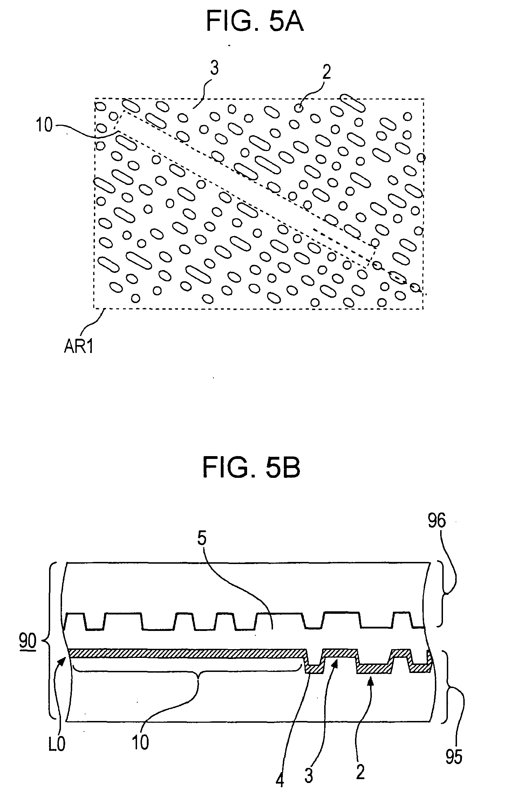

Figs. 5A and 5B show a state before additional information is recorded in the additional recording step in correspondence with Figs. 4A and Fig. 4B.

As shown in Fig. 5A, the additional information recording section 10 is formed as a section in which a recessed and projecting pattern formed by pits 2 and lands 3 is not formed as a non-modulation section. As can be seen from Fig. 5B, the additional information recording section 10 exists on the same plane as the land 3, and is formed as a so-called mirror part by being coated with the reflection film 4.

The additional information is recorded to such an additional information recording section 10 in the additional recording step.

That is, the additional information recording device 150 is provided as a dedicated recording device using, for example, a high output red semiconductor laser. The additional information recording device 150 has a function of tracking a pit sequence of the information recording area 1 by using, for example, a DPD (differential phase detection), and a function of causing a high output laser pulse for recording to be light-emitted in a desired section. The additional information recording device 150 performs recording to the additional information recording section 10 in the state of Figs. 5A and 5B and forms hole marks 6, as shown in Figs. 4A and 4B. For the modulation of a light-emission pattern at that time, an EFM+ signal is used as the same modulation method as the modulation corresponding to a pit sequence of the information recording area.

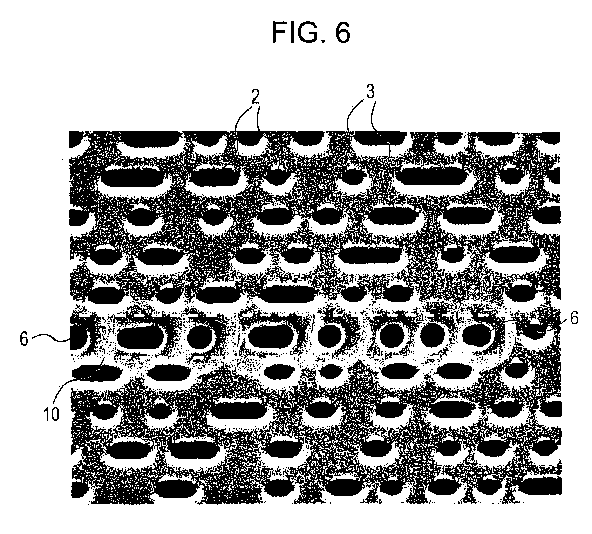

Fig. 6 shows a state of a sample, in which a high output laser is emitted to form hole marks 6, as recording of additional information to the recording section 10 on the read-only optical disc 90. This is an SEM (scanning electron microscope) observation photograph of the additional information recording section 10 in which hole marks 6 are formed.

At the time of SEM observation, the optical disc substrate 95 formed with the reflection film and the lamination substrate 96 (dummy optical disc substrate) are peeled off at the bonded surface, and an electron beam is emitted to a portion where the reflection film 4 is exposed and observed. For the reflection film 4, an Al alloy containing Al as a base alloy and containing approximately 1 atomic% of Fe and approximately 5 atomic% of Ti was used.

As can be seen from Fig. 6, the metal alloy reflection film formed in the additional information recording section 10 is erased or decreased in accordance with the modulation signal of the additional information, holes are formed in an elliptic shape, and hole marks 6 corresponding to pits are formed beautifully.

Furthermore, the length X of the additional information recording section 10 in the track line direction, shown in Fig. 4A, is appropriately in a range of 2 $\mu$m to 150 $\mu$m.

The pit pattern formed by the EFM+ signal is in a range of 3T to 14T, and a 3T mark has a length of 0.4 $\mu$m. When a recording data sequence as at least a 3T space, a 3T mark, a 3T space, a 3T mark, and a 3T space is to be formed in the additional information recording section 10, the length X of the additional information recording section 10 needs to be 2 $\mu$m.

Furthermore, when hole marks 6 are to be formed by the additional information recording device 150, tracking needs to be maintained in the additional information recording section 10. The additional information recording section 10 is formed as a mirror surface before the hole marks 6 are formed, and is a section in which a tracking error signal is not obtained. That is, the length at which an on-tracking state can be maintained in the section before and after the additional information recording section 10 is the limit of the length as the additional information recording section 10. This is preferably up to approximately 150 $\mu$m depending on the tracking performance and the tracking servo band of the additional information recording device 150.

In practice, the length X of the additional information recording section 10 may be set in the range of 2 $\mu$m to 150 $\mu$m according to the amount of information of the additional information to be recorded in the additional information recording section 10, and may be set to, for example, 10 to 40 $\mu$m. In the case of a DVD, 10 to 40 $\mu$m corresponds to approximately 5 to 20 symbols, and is a suitable length when error correction and arbitrarity of data are considered.

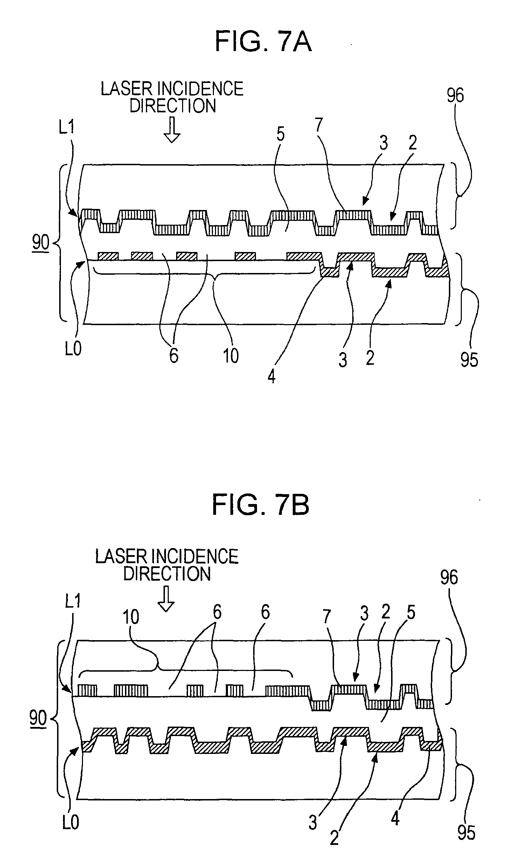

By the way, in Fig. 3A to Fig. 5B above, a so-called single layer disc on which one information recording surface L0 is provided as an information recording surface is shown. Even in the case of a multilayer disc on which plural information recording surfaces are provided, a recording data sequence of hole marks 6 can be formed as described above. Figs. 7A and 7B each show an example of a cross-sectional structure.

Figs. 7A and 7B each show a read-only optical disc 90 on which two information recording surfaces L0 and L1 are formed, and in particular, show the cross-sectional structure of a portion in which the additional information recording section 10 is provided.

In the case of the read-only optical disc 90 of a two-layer structure, a semi-transparent reflection film is used as the lamination substrate 96 with respect to the optical disc substrate 95 formed with the reflection film. The optical disc substrate formed with the semi-transparent reflection film is an optical disc substrate such that the semi-transparent reflection film 7 is formed on a disc substrate on which a predetermined recording data sequence of pits/lands is formed. The information recording surface L0 is formed on one main surface of the optical disc substrate 95 formed with the reflection film, and the information recording surface L1 is formed on one main surface of the optical disc substrate formed with the semi-transparent reflection film.

The information recording surfaces L0 and L1 can be formed by a well-known method. For example, two optical disc substrates 94 are formed simultaneously. At the same time as the formation, pits 2 and lands 3 forming the first information recording surface L0 are formed on one main surface of one of the optical disc substrates 94, and pits 2 and lands 3 forming the second information recording surface L1 are formed on one main surface of the other optical disc substrate 94.

Next, the reflection film 4 is formed, for example, by sputtering on the surface of the information recording surface L0 of one of the optical disc substrates 94, and the semi-transparent reflection film 7 is formed by sputtering on the surface of the information recording surface L1 of the other optical disc substrate 94.

Then, for example, an ultraviolet hardening resin is applied onto the information recording surface L0 of one of the optical disc substrates 94, and the information recording surface L0 is laminated by being bonding with the information recording surface L1 of the other optical disc substrate 94, and the ultraviolet hardening resin is hardened by irradiating with an ultraviolet beam.

Even in the case of two or more information recording surfaces, hole marks 6 can be formed in the same manner as that described above. That is, in the additional information recording device 150, a recording laser is focused to the information recording surface on the side where the additional information recording section 10 is formed as a non-modulation section, and a laser is made to emit light according to the modulation signal of the additional information at an appropriate output, thereby forming hole marks 6.

Fig. 7A shows an example in which the additional information recording section 10 is provided on the information recording surface L0 side, and laser radiation is performed therein in order to erase or decrease the reflection film 4 (total reflection film), thereby forming hole marks 6.

Furthermore, Fig. 7B shows an example in which the additional information recording section 10 is provided on the information recording surface L1 side, and laser radiation is performed therein in order to erase or decrease the semi-transparent reflection film 7, thereby forming hole marks 6.

Furthermore, at this time, although the direction in which a recording laser is radiated is not limited, for example, as shown in Fig. 7A, when the laser incidence direction is set and hole marks 6 are to be formed on the information recording surface L0 side, the effective output of the laser light focused onto the information recording surface L0 becomes a value attenuated by the semi-transparent reflection film 7. Therefore, the value of the laser output at the time of emission needs to be set to be large by considering the amount of attenuation.

As shown in this example of Figs. 7A and 7B, even in the case of the read-only optical disc 90 of a multilayer structure, the additional information recording section 10 can be provided on one of the information recording surfaces, and the additional information can be written as a data sequence of hole marks 6 in the additional information recording section 10.

Here, one of the information recording surfaces is used. In addition, for example, the additional information recording section 10 may be provided on both the information recording surfaces L0 and L1, and a recording data sequence by hole marks 6 may be formed on both the information recording surfaces.

Here, in order that the read-only optical disc 90 of this example can be used as a DVD, naturally, a disc in compliance with DVD standard needs to be used; that is, a portion where a recording data sequence of hole marks 6 also needs to be in accord with the DVD standard.

For this purpose, in a recording data sequence portion formed by hole marks 6, at least the following conditions need to be satisfied.

· A recording data sequence of hole marks 6 satisfies a run-length limitation.
· The reflectance complies with the DVD standard in the recording data sequence of hole marks 6.
· The degree of modulation of a reproduction signal in a recording data sequence portion of hole marks 6 complies with the DVD standard.
· The symmetry of a reproduction signal in the recording data sequence portion of hole marks 6 complies with the DVD standard.
· A jitter value of a recording data sequence portion of hole marks 6 complies with the DVD standard.

First, the fact that a recording data sequence of hole marks 6 satisfies a run-length limitation of a DVD necessitates that a pattern of hole marks 6 of 3T to 14T and lands is formed. For this purpose, the additional information needs only be modulated into an EFM+ signal in the same manner as in the normal formation of a recording data sequence of pits/lands, hole marks 6 need only be formed on the basis of the EFM+ signal, and a run-length limitation needs only be satisfied also in the relationship with a pit sequence before and after the additional information recording section.

Furthermore, in the DVD standard, reflectance is made to be from 60% to 85% in the case of a single layer disc (in the case of a non-polarizing optical system), or is made to be from 45% to 85% (in the case of a polarizing optical system). In the case of a two-layer disc, the reflectance is made to be from 18% to 30%.

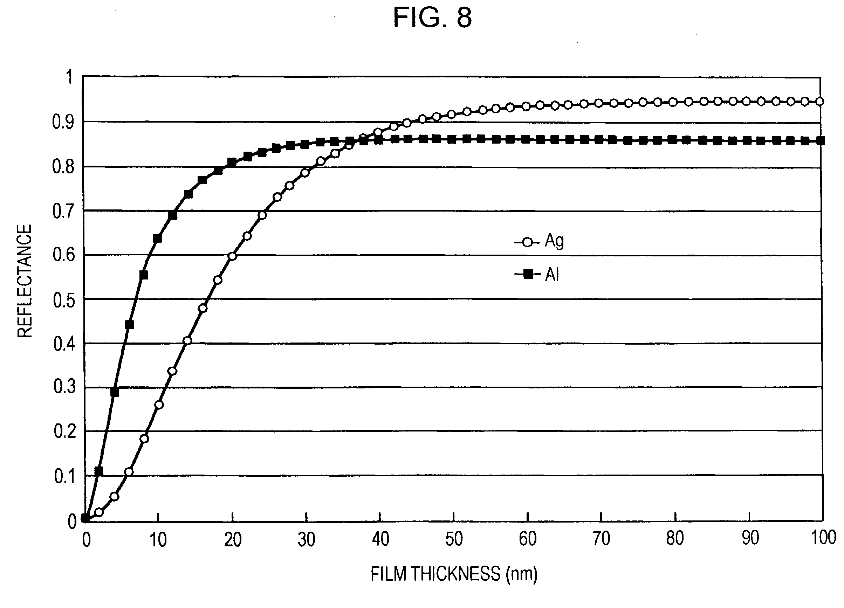

The relationship between the reflectance of the portion of the hole marks 6 and the film thickness of the reflection film is shown in Fig. 8. Here, reflectances are shown, which were computed using a computer, when light having a wavelength 650 nm was radiated through a resin having a refractive index of approximately 1.5 for cases in which pure Ag and pure Al were used as reflection films correspondingly.

It can be seen from Fig. 8 that the thinner the film thickness, the lower the reflectance. When the reflection film is pure Ag, the reflectance becomes approximately 80% at a film thickness of approximately 30 nm, and exceeds 90% and becomes flat when the film thickness is 50 nm or more. When the reflectance is pure Al, reflectance becomes approximately 70% at a film thickness of approximately 10 nm, and exceeds 85% at a film thickness of approximately 20 nm and becomes flat at a film thickness of approximately 35 nm or more.

In the present invention, in order to stably form additional information data as hole marks, for example, an Al alloy in which a chemical element is added to pure Al is used as a reflection film. In the case of an Al alloy, since the reflectance when comparison is performed at the same film thickness is decreased lower than that in the case of pure Al, regarding the reflection film material, the composition and the film thickness of the Al alloy may be controlled so that the reflectance when it become flat satisfies the DVD standard, for example, the reflectance becomes 60% or more in the non-polarizing optical system.

Here, the portion of the hole marks 6 is a portion where they were formed by causing the reflection film to be erased or decreased, and a space portion (land portion) between the hole mark 6 and the next hole mark 6 is a portion where the reflection film is ordinarily left. Basically, the space portion between the hole mark 6 and the next hole mark 6 has a film thickness that is the same as that of the portion of the land 3 of the recording data sequence of pits 2 and lands 3, and a necessary reflectance is obtained.

The degree of modulation is set as follows in the DVD standard:

$$I14/I14H \geq 0.60 \quad I3/I14 \geq 0.15 \text{ (in the case of a single layer disc)}$$

$$I3/I14 \geq 0.20 \text{ (in the case of a two-layer disc).}$$

Furthermore, the asymmetry is set as follows in the DVD standard:

$$-0.05 \leq ((I14H + I14L)/2 - (I3H + I3L)/2)/I14 \leq 0.15.$$

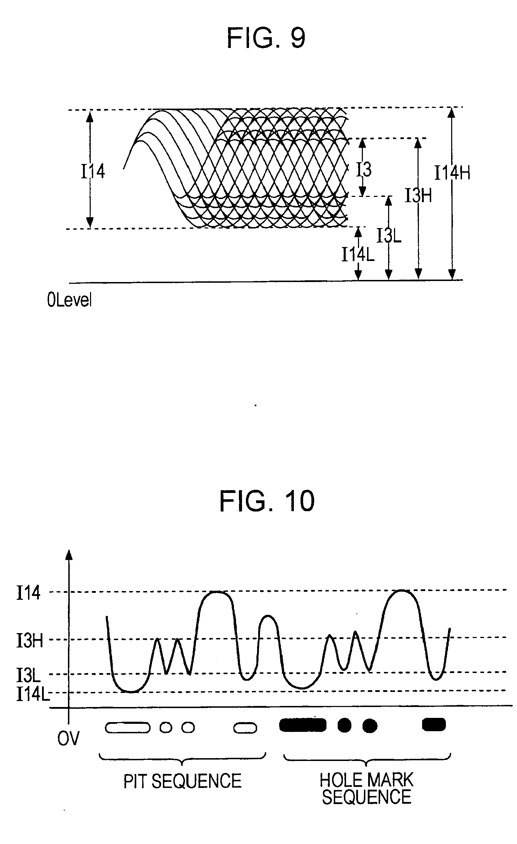

Fig. 9 is a schematic view of an eye pattern of a reproduction signal. I14 is the amplitude level of the peak-bottom of a 14T pattern. I14H is the peak level of the 14T pattern. I14L is the bottom level of the 14T pattern. I3 is the amplitude level of the peak-bottom of a 3T pattern. I3H is the peak level of the 3T pattern. I3L is the bottom level of the 3T pattern. Fig. 10 is a schematic view of a reproduction signal amplitude in a recording data sequence of pits 2 and lands 3 and a reproduction signal amplitude in a recording data sequence of hole marks 6 according to the present invention. As shown in Fig. 10, as I14H, I14L, I3H, and I3L, almost equal levels can be obtained from the recording data sequence of pits 2 and lands 3 and from the recording data sequence of hole marks 6, and the standards of the degree of modulation and the asymmetry can be satisfied.

Regarding a jitter value (versus a channel bit clock time), a recording data sequence needs only be formed by hole marks 6 so that the jitter value is smaller than or equal to 8.0%.

Furthermore, in order for an ordinary reproduction device, in particular, a reproduction device not having a dedicated function of reproducing a recording data sequence of hole marks 6 to reproduce a recording data sequence of hole marks 6 in the same manner as for a recording data sequence of pits/lands, it is necessary that the logics of hole marks 6 match each other.

In this case, for example, the reproduction signal becomes an L value for a pit 2 and becomes an H value for a land 3. In the portion of the recording data sequence of hole marks 6, the reproduction signal becomes an L value for a hole mark 6 and becomes an H value for a space portion between the hole mark 6 and the next hole mark 6. That is, the logics represented by the pit 2 and the hole mark 6 match each other.

As has already been well known, in a recording data sequence of pits/lands, information represented by pits/lands is detected on the basis of a change in reflection light intensity due to a phase difference. That is, in the pit 2, the amount of reflected light is decreased due to the relationship between interference due to phase differences of diffracted light and the aperture of the objective lens of the reproduction device. As a result, in the lands 3 and the pits 2, the difference between the amounts of detected reflected light is obtained, making it possible to obtain a reproduction signal waveform corresponding to pits/lands.

On the other hand, in the recording data sequence of hole marks 6, the difference between the amounts of detected reflected light, which in detected by the difference between the reflectance in the hole mark 6 and that in the space portion, is obtained. As can be seen from Fig. 8, the hole mark 6 where the reflection film is almost erased has a low reflectance. On the other hand, in the space portion where the reflection film is left, there is a high reflectance.

As a result, as is also shown in Fig. 10, when viewed from a reproduction signal waveform, for the pit sequence and the recording data sequence of hole marks 6, almost identical reproduction signal waveforms are obtained, and the logic values corresponding to the pits 2 are the same as those corresponding to the hole marks 6.

In the following, a description will be given of experiment results in which a signal can be detected from a DVD serving as the read-only optical disc 90 on which additional information has been recorded as a recording data sequence of hole marks 6 without needing a reproduction device having a special reading function.

In the experiment, an optical disc substrate having a plurality of additional information recording sections 10 within a content area was provided. An approximately 35 nm-thick Al alloy film having a composition differing from the Al alloy film used in Fig. 6 was formed on the optical disc substrate, and was laminated to a dummy optical disc substrate, thereby manufacturing a read-only DVD.

The length X of the additional information recording section 10 in the track line direction was set to approximately 40 $\mu$m. Next, additional information was formed by hole marks 6 in all the plurality of the additional information recording sections 10 so that, after the reproduction signal was detected, an EFM+ signal could be correctly decoded by considering the information data of the pit sequences before and after individual additional information recording sections 10. For the additional information recording device 150 used to form hole marks 6, a high output laser writer with an optical system having a wavelength 650 nm and an objective lens with an NA of 0.60 was used.

If the recording of the additional information into the additional information recording section 10 is not successful, the number of decoding errors increases, and, in the worst case, reading becomes impossible.

<Comparative Example>

A read-only optical disc 90 (DVD) on which recording was performed in the additional information recording section 10 by setting the laser output of the additional information recording device 150 to 64 mW was provided.

In this case, commercially available DVD players of seven makers were provided, and a reproduction test was carried out. As a result, a decoding error occurred in all the seven model types, and reproduction was not possible.

<Experiment Example>

A read-only optical disc 90 (DVD) on which recording was performed in the additional information recording section 10 by setting the laser output of the additional information recording device 150 to 73 mW on the disc surface was provided.

Then, commercially available DVD players of seven makers were provided, and a reproduction test was carried out. As a result, a decoding error did not occur in any of the players, and the additional information could be read.

Next, a reproduction test was carried out one more time after the read-only optical disc 90 (DVD) on which the additional information recording was recorded was stored for 240 hours in an environment at 80°C and 85% and an acceleration deterioration test was carried out. Even after being subjected to such an environment, a decoding error did not occur in any of the players, and reading was successful.

As a result of the above results, in the case that additional information is recorded by performing recording of hole marks 6 by appropriate laser output, it was verified that it is possible for the read-only optical disc 90 of this embodiment to be reproduced with an ordinary commercially available DVD player without necessitating a special reading device.

Furthermore, in the embodiments, as the read-only optical disc 90 employing a DVD method, an example in which the present invention is realized has been described. The present invention can also be applied to a read-only optical disc medium employing another disc method and another manufacturing method.

**Claims**

1. A read-only optical disc medium which has an information recording surface having a recessed and projecting shape, the information recording surface being formed on the basis of a first modulation signal, and a reflection film with which the information recording surface is coated, and on which recording tracks are formed by forming the recessed and projecting shape as a first recording data sequence formed of pits and lands, **characterized in that:**

   an additional information recording section in which the information recording surface is planar is provided in the recording tracks on which the first recording data sequence formed of pits and lands is formed, and in the additional information recording section, a second recording data sequence formed in such a manner that the reflection film is erased or decreased on the basis of a second modulation signal is formed.

2. The read-only optical disc medium according to Claim 1, **characterized in that** a modulation method for generating the first modulation signal and a modulation method for generating the second modulation signal are the same modulation method.

3. The read-only optical disc medium according to Claim 1, **characterized in that** a logic value corresponding to the pits, the logic value being detected from a reproduction signal read from the first recording data sequence, is the same as a logic value corresponding to a portion in which the reflection film is erased or decreased, the logic value being detected from the reproduction signal read from the second recording data sequence.

4. The read-only optical disc medium according to Claim 1, **characterized in that** the additional information recording section has a length from 2 μm to 150 μm in the line direction of the recording tracks.

5. The read-only optical disc medium according to Claim 1, **characterized in that** a recording track adjacent, in the radial direction of the disc, to the recording track on which the additional information recording section is formed is a recording track on which the recording data sequence formed of pits and lands is formed.

6. The read-only optical disc medium according to Claim 1, **characterized in that** the optical disc medium has a first information recording surface far from a light incidence surface and a second information recording surface close to the light incidence surface, the additional information recording section is provided on at least the first information recording surface, and in the additional information recording section on the first information recording surface, the second recording data sequence formed in such a manner that the reflection film is erased or decreased on the basis of the second modulation signal is formed.

7. The read-only optical disc medium according to Claim 1, **characterized in that** the optical disc medium has a first information recording surface far from a light incidence surface and a second information recording surface close to the light incidence surface, the additional information recording section is provided on at least the second information recording surface, and in the additional information recording section on the second information recording surface, the second recording data sequence formed in such a manner that the reflection film is erased or decreased on the basis of the second modulation signal is formed.

8. The read-only optical disc medium according to Claim 1, **characterized in that** the second recording data sequence has a pattern of 3T to 14T, a reflectance of the second recording data sequence is from 60% to 85%, a degree of modulation of the second recording data sequence satisfies the following:

$$I14/I14H \geq 0.60$$

$$I3/I14 \geq 0.15,$$

an asymmetry of the second recording data sequence satisfies the following:

$$-0.05 \leq ((I14H + I14L)/2 - (I3H + I3L)/2)/I14 \leq 0.15,$$

and
a jitter value is smaller than or equal to 8.0%.

9. A method of manufacturing a read-only optical disc medium, the method including:

a mastering step of forming a stamper having a recessed and projecting shape on the basis of a first modulation signal;
a molding step of forming the recessed and projecting shape on an information recording surface by using the stamper; and
a film-forming step of coating a reflection film on the information recording surface,
the method being **characterized in that**, in the mastering step, a planar additional information recording section is formed in the stamper,
in the film-forming step, the planar additional information recording section is formed,
after the film-forming step, an additional recording step of erasing or decreasing the reflection film in the additional information recording section on the basis of a second modulation signal is provided, and
recording tracks are structured by forming the recessed and projecting shape inverted on the information recording surface as a first recording data sequence formed of pits and lands and by forming the erasure or decrease of the reflection film in the additional information recording section as a second recording data sequence.

10. The method of manufacturing a read-only optical disc medium according to Claim 9, **characterized by** including a laminating step of laminating a substrate having the recording tracks and another substrate after the film-forming step and before the additional recording step.

FIG. 1

EP 2 053 602 A1

# FIG. 2

## FIG. 3A

## FIG. 3B

# FIG. 4A

# FIG. 4B

# FIG. 5A

# FIG. 5B

FIG. 6

# FIG. 7A

LASER INCIDENCE
DIRECTION

L1

90

L0

6    10

4

3  2

5  7    3  2

96

95

# FIG. 7B

LASER INCIDENCE
DIRECTION

L1

90

L0

10    6    6    7  3 2  5

96

3
2

4

95

## FIG. 8

EP 2 053 602 A1

# FIG. 9

# FIG. 10

## INTERNATIONAL SEARCH REPORT

| International application No. |
|---|
| PCT/JP2007/071735 |

A. CLASSIFICATION OF SUBJECT MATTER
*G11B7/007*(2006.01)i, *G11B7/24*(2006.01)i

According to International Patent Classification (IPC) or to both national classification and IPC

B. FIELDS SEARCHED

Minimum documentation searched (classification system followed by classification symbols)
G11B7/007, G11B7/24

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 4-358333 A (Mitsui Toatsu Chemicals, Inc.), 11 December, 1992 (11.12.92), Par. No. [0003] (Family: none) | 1-10 |
| Y | JP 4-301494 A (Hitachi Maxell, Ltd.), 26 October, 1992 (26.10.92), Claim 4; Par. Nos. [0005], [0006] (Family: none) | 1-10 |
| Y | JP 5-258352 A (Mitsui Toatsu Chemicals, Inc.), 08 October, 1993 (08.10.93), Claim 1; Par. Nos. [0003] to [0005] (Family: none) | 1-10 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 December, 2007 (17.12.07) | 25 December, 2007 (25.12.07) |

| Name and mailing address of the ISA/ Japanese Patent Office | Authorized officer |
|---|---|
| Facsimile No. | Telephone No. |

Form PCT/ISA/210 (second sheet) (April 2007)

22

**INTERNATIONAL SEARCH REPORT**

| International application No. |
| --- |
| PCT/JP2007/071735 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-528674 A  (Koninklijke Philips Electronics N.V.), 16 September, 2004 (16.09.04), Par. Nos. [0003] to [0005] & US 2004-0148623 A1     & EP 001449209 A & WO 02-099798 A1          & CA 002449429 A & CN 001513178 A          & TW 000240265 B | 1-10 |
| Y | JP 7-311982 A  (Ricoh Co., Ltd.), 28 November, 1995 (28.11.95), Par. Nos. [0003] to [0005] (Family: none) | 1-10 |
| Y | JP 10-105974 A  (Victor Company Of Japan, Ltd.), 24 April, 1998 (24.04.98), Claim 1; Par. No. [0003] (Family: none) | 1-10 |
| Y | JP 2005-78727 A  (Fujitsu Ltd.), 24 March, 2005 (24.03.05), Par. No. [0002] (Family: none) | 6,7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001135021 A
- WO 01008145 PCT
- WO 02101733 PCT